# EUROPÄISCHE PATENTANMELDUNG

(11) **EP 1 669 231 A2**
(43) Veröffentlichungstag der Anmeldung: **14.06.2006**
(21) Anmeldenummer: 05025300.4
(22) Anmeldetag: 19.11.2005
(51) Int. Cl.: B60J 5/06, E05B 65/00, E05B 65/20, E05D 15/26

(54) **Faltschiebetür für Kraftfahrzeuge**

(30) Priorität: 10.12.2004 DE 102004059501
(71) Anmelder: IAV GMBH INGENIEURGESELLSCHAFT AUTO UND VERKEHR, 10587 Berlin (DE)
(72) Erfinder: Hartzendorf, Jörg, 09114 Chemnitz (DE)
(74) Vertreter: Buss, Fritz Gerd

(57) **Zusammenfassung**

Die Erfindung betrifft eine Fahrzeugtür für Kraftfahrzeuge.

Der Erfindung liegt die Aufgabe zugrunde, eine Fahrzeugtür für Kraftfahrzeuge zu schaffen, mit der bei einer geringen Beanspruchung des Verkehrsraumes ein möglichst großer und komfortabler Zugang zum Fahrzeuginnenraum und unter Vermeidung von Führungsschienen im Sichtbereich des Fahrzeuges geschaffen wird und mit der ein sicheres Verschließen der einzelnen Türen erfolgt.

Erfindungsgemäß sind die Türelemente (6) und (7) als Falttür ausgebildet, bei der die zwischen den Türelementen (6) und (7) befindlichen Scharniere (9) jeweils in den Radbereichen der Türelemente (6) und (7) angeordnet und als Scharnier-Schloss-Kombination derart ausgebildet sind, dass deren zylindrisch ausgebildeten Schamierachsen (11) bei geschlossenen Türelementen (6) und (7) jeweils mit einem an der Fahrzeugkarosserie angeordneten Drehfallenschloss (4) in Eingriff stehen.

## Beschreibung

Die Erfindung betrifft eine Fahrzeugtür für Kraftfahrzeuge mit den im Oberbegriff des Patentanspruches 1 genannten Merkmalen.

Zur Reduzierung des Platzbedarfs beim Öffnen einer Fahrzeugtür und bei gleichzeitiger Realisierung eines großen Einstiegraumes, werden insbesondere bei Nutzfahrzeugen Faltschiebetüren als Heck- und Seitentür eingesetzt. So ist aus der DE 297 18 179 U1 eine mehrgliedrige Faltschiebetür am Heck eines Kraftfahrzeuges vorbekannt, die aus mehreren horizontal verschieblichen Türflügeln mit einer gleichen Breite besteht. Dabei ist rechts und links am Türrahmen mittels Scharnieren jeweils ein Türelement befestigt, an denen über Scharniere ein weiterer Türflügel befestigt ist, die über am Boden und der Decke der Türöffnung angeordnete Schienen verschiebbar geführt werden. Die einzelnen Türflügel sind mit einer Schließvorrichtung versehen, deren Verriegelungsbolzen bei geschlossener Tür in die Boden- und Deckenschiene eingreifen.

Aus der US 2,581,797 ist eine faltbare Seitentür für Kraftfahrzeuge vorbekannt, die aus zwei durch Scharniere verbundene Türelemente besteht. Ein Türelement ist über Scharniere mit den Türrahmen verbunden, während das andere Türelement in einer Boden- und Deckenschiene geführt wird und mit einer Verschlussvorrichtung versehen ist.

Weiterhin ist aus der DE 199 01 016 A1 eine als Falttür ausgebildete Fahrertür bekannt, die aus mehreren Türelementen besteht. Zum Zusammenfalten der Falttür zu einem Faltpaket sind die Türelemente mittels eines Verbindungsgelenkes um wenigstens eine vertikale Gelenkachse verschwenkbar. Das in Fahrtrichtung vorderste Türelement ist mittels eines Schwenkgelenks im vorderen Bereich der Fahrtüröffnung an der Fahrzeugkabine um eine vertikale Schwenkachse verschwenkbar angeschlagen.

Gemäß der DE 10 2004 011 903 wurde vorgeschlagen, dass zur Erzielung eines großen Türöffnungsquerschnitts an der Fahrzeugseite zwei gegenläufig öffnende Fahrzeugtüren unter Wegfall einer zwischen den Türen angeordneten Säule angeordnet sind. Eine der Fahrzeugtüren ist dabei als Schiebetür ausgebildet.

Nachteilig beim Stand der Technik ist, dass bei dem Einsatz von Falttüren als Seitentür eines Kraftfahrzeuges, nicht auf eine B-Säule verzichtet werden kann, wodurch der barrierefreie Zugang zum Fahrzeug eingeschränkt wird. Außerdem ist ein aufwendiger Verschluss der einzelnen Türelemente mit der Fahrzeugkarosserie erforderlich. Bei den gegenläufig sich öffnenden Fahrzeugtüren besteht der Nachteil, dass der freigegebene Türöffnungsquerschnitt bei einer geöffneten Schiebetür durch die Gestaltung des Hinterwagens begrenzt wird. Ein weiterer Nachteil besteht in der Anordnung der für die Schiebetür benötigten Führungsschienen, die meistens im Sichtbereich angeordnet sind und deshalb als störend empfunden werden. Nachteilig ist weiterhin, dass ein unabhängiges Öffnen der hinteren Tür in den meisten Fällen nicht möglich ist. Zum Öffnen der hinteren Tür muss dazu vorher die vordere Tür geöffnet werden.

Der Erfindung liegt die Aufgabe zugrunde, eine Fahrzeugtür für Kraftfahrzeuge zu schaffen, mit der bei einer geringen Beanspruchung des Verkehrsraumes ein möglichst großer und komfortabler Zugang zum Fahrzeuginnenraum und unter Vermeidung von Führungsschienen im Sichtbereich des Fahrzeuges geschaffen wird und mit der ein sicheres Verschließen der einzelnen Türen erfolgt.

Erfindungsgemäß wird die Aufgabe durch die Merkmale des Patentanspruches 1 gelöst.

Zur Erzielung eines möglichst großen Zugangs in den Innenraum eines Kraftfahrzeuges besteht die Fahrzeugtür aus wenigstens zwei zueinander faltbar angeordneten Türelementen, die über Scharniere miteinander verbunden sind und einem weiteren einzelnen Türelement. Dabei ist an einer Seite des Fahrzeugtürrahmens eine Au-βenseite eines Türelements der Falttür über Scharniere und an der gegenüber liegenden Seite des Fahrzeugtürrahmens ist das einzelne Türelement über Scharniere an dem Türrahmen angelenkt. Durch die Anordnung einer Falttür in Verbindung mit einer einzelnen Vordertür wird bei Wegfall einer zwischen den beiden Türen ansonsten notwendigen B-Säule ein sehr großer Türöffnungsquerschnitt freigegeben. Führungsschienen im Sichtbereich des Fahrzeuges sind nicht mehr erforderlich, so dass die optische Gesamtansicht des Fahrzeuges verbessert wird.

Durch die Ausbildung der zwischen den einzelnen Türelementen der Falttür angeordneten Schamieren als Scharnier-Schloss-Kombination, bei dem die Scharnierachsen zylindrisch ausgebildet sind und bei geschlossenen Türelementen mit einem an der Fahrzeugkarosserie angeordneten Drehfallenschloss in Eingriff stehen, wird erreicht, dass bei geschlossener Tür eine feste Verriegelung der Türelemente mit der Fahrzeugkarosse erfolgt. Durch die Anordnung der Scharnier-Schloss-Kombination zwischen den Türelementen der Falttür und der Fahrzeugkarosserie wird eine optimale geometrische Aufteilung der Anbindungspunkte der Falttür in Bezug zur Karosserie realisiert. Ein Abheben der Tür von dem Türrahmen während der Fahrt durch aerodynamischer Druckunterschiede inner- und außerhalb der Fahrzeugkarosserie wird durch die Anordnung der Scharnier-Schloss-Kombination stark reduziert bzw. weitestgehend unterbunden.

Ein weiterer Vorteil der erfindungsgemäßen Lösung besteht darin, dass die faltbare Schiebetür in Kombination mit anderen Türelementen, wie beispielsweise mit einer Vordertür oder einer weiteren Schiebetür, einsetzbar sind. Die Fahrzeugtür mit der erfindungsgemäßen Anordnung der Scharnier-Schloss-Kombination ist dabei als Seitentür und/oder als Hecktür einsetzbar.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine perspektivische Seitendarstellung der erfindungsgemäßen Lösung bei Einsatz als Seitentür mit geöffneten Türelementen,
- Fig. 2:: eine perspektivische Darstellung von oben gesehen mit teilweise geöffneter Falttür und geschlossenen Vordertür,
- Fig. 3:: ein Detail der unteren Falttürführung gemäß Figur 1,
- Fig. 4:: ein Detail der Scharnier-Schloss-Kombination und
- Fig. 5:: die Scharnier-Schloss-Kombination als Einzelheit.

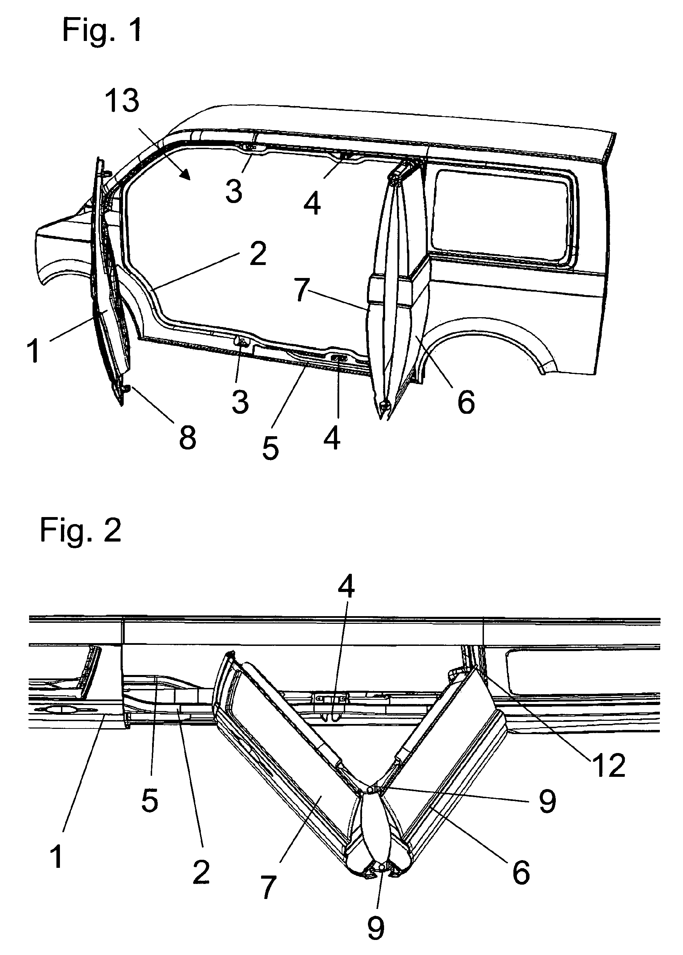

Die erfindungsgemäße Lösung wird erläutert am Beispiel einer als Seitentür eingesetzten Fahrzeugtür für Kraftfahrzeuge. Gemäß Figur 1 ist eine Türöffnung 13 durch ein einzelnes Türelement 1, in diesem Fall einer Vordertür, und einer aus wenigstens zwei zueinander faltbar angeordneter Türelemente 7 und 6, verschließbar. Das Türelement 1 ist dabei über Scharniere mit der Fahrzeugkarosserie im Bereich der vorderen senkrechten Türöffnung 13 verbunden, während das Türelement 6 über Scharniere 12 an den gegenüberliegenden Türrahmen angeschlagen ist. Die Verbindung zwischen der als Falttür ausgebildeten Türelementen 6 und 7 erfolgt über Scharniere 9, wie aus Figur 2 ersichtlich ist. Die Abdichtung zwischen dem Türelement 1, 6 und 7 gegenüber der Fahrzeugkarosserie erfolgt über eine Dichtung 2, die an der Fahrzeugkarosserie im Bereich der Türöffnung 13 angeordnet ist.

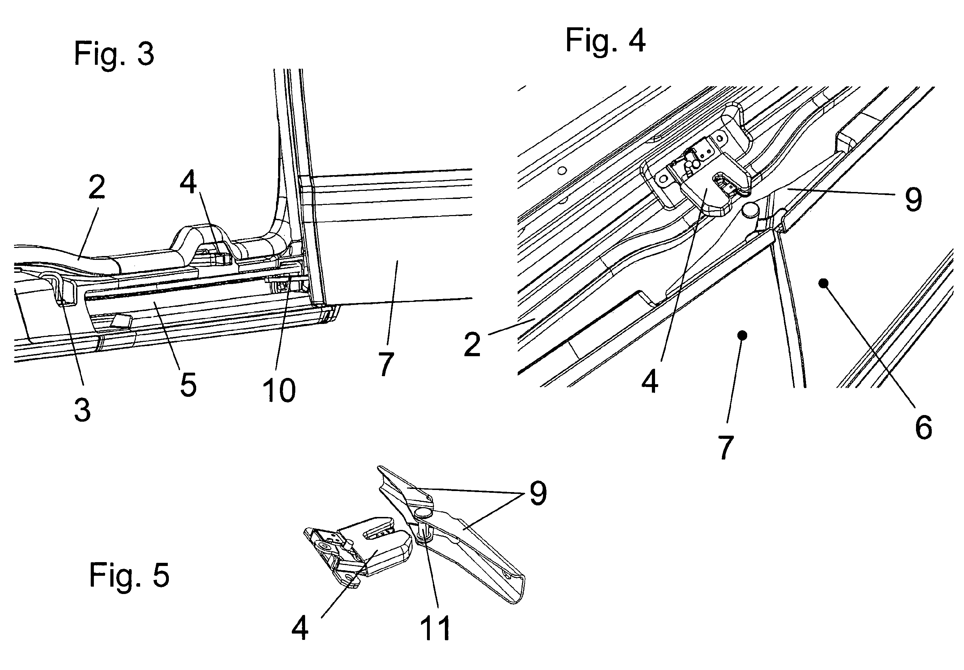

In den äußeren Randbereichen der zusammenstoßenden Türelemente 6 und 7 sind Scharniere 9 angeordnet, die in Verbindung mit an der Fahrzeugkarosserie angeordneten Drehfallenschlössern 4 als Scharnier-Schloss-Kombination ausgebildet sind. Aus Figur 4 ist die Anordnung der zwischen den Türelementen 6 und 7 befindlichen Scharniere 9 ersichtlich. Im oberen und unteren Bereich der Türöffnung 13 ist jeweils das Drehfallenschloss 5 angeordnet, in den eine als Zylinder ausgebildete Scharnierachse 11 beim Schließen der Tür einrastet. In der Figur 4 ist das Scharnier 9 und das Drehfallenschloss 4 kurz nach der Öffnung bzw. kurz vor dem Schließen der Türelemente 6 und 7 dargestellt. In der Figur 5 ist das Drehfallenschloss 4 und das Scharnier 9 als Einzelheit abgebildet, aus der die zylindrisch ausgebildete Scharnierachse 11 ersichtlich ist, die in Eingriff mit der entsprechenden Aussparung des Drehfallenschlosses 4 bringbar ist.

Eine Variante der erfindungsgemäßen Lösung sieht vor, dass die zylindrisch ausgebildete Scharnierachse 11, des einen Scharniers 9 bei geschlossenen Türelementen 6 und 7, mit einem an der Fahrzeugkarosserie angeordneten Drehfallenschloss 4, und die zylindrisch ausgebildete Scharnierachse 11, des anderen Scharniers 9 bei geschlossenen Türelementen 6 und 7, mit einem an der Fahrzeugkarosserie angeordneten, nicht dargestellten Rastzapfen, in Eingriff steht. Dadurch können die Kosten durch Einsparung eines Drehfallenschlosses 4 reduziert werden.

Die Falttür stützt sich, wie in Figur 3 dargestellt, über ein an das vordere Türelement 7 angeordnetes Tragglied und einem an sich bekannten Rollenwagen 10, in einer Führungsschiene 5, ab. Die Führungsschiene 5, in der der Rollenwagen 10 verschiebbar angeordnet ist, befindet sich dabei im Bereich des Türschwellers, unterhalb der Türöffnung 13. Zur Führung der aus den Türelementen 6 und 7 bestehenden Falttür ist es auch möglich, im Dachbereich oberhalb der Türöffnung 13 eine entsprechende Führungsschiene anzuordnen.

Das über die Scharniere 12 mit dem Türrahmen verbundene Türelement 6 der Falttür weist eine geringere Breite auf als das in der Führungsschiene 5 geführte Türelement 7. Durch die asymmetrische Teilung der Türelemente 6 und 7 kann die Hebelarmlänge des Tragglieds des Rollenwagens 10 geringer ausgeführt werden als bei mit gleicher Breite ausgeführten Türelementen 6 und 7. Durch die asymmetrische Teilung der Türelemente 6 und 7 wird das Türelement 7 näher an der Karosserie geführt, dadurch wird insgesamt der benötigte Verkehrsraum zum Öffnen und Schließen der Falttür verringert. Ein weiterer Vorteil besteht darin, dass die Anbindung und Führung des Türelements 7 durch das kürzere Tragglied des Rollenwagens 10 kompakter und stabiler ausgeführt werden kann.

Die Verriegelung und Fixierung des vorderen Bereichs des Türelements 7 mit der Fahrzeugkarosserie erfolgt bei einer geschlossenen Falttür mittels einer Verschlussvorrichtung, die mit dem Rahmen der Türöffnung 13 in Wirkverbindung bringbar ist. Dabei ist in dem vorderen äußeren Bereich des Türelements 7 ein Verriegelungsbolzen, ein Rastzapfen oder dergleichen angeordnet, der in eine an der Fahrzeugkarosserie angebrachte Aufnahme ein- und ausrastbar ist. Das Öffnen der Türelemente 6 und 7 erfolgt über einen an dem Türelement 7 angebrachten Betätigungsgriff, wobei beim Öffnen über einen Bowdenzug jeweils die Sperrklinke der Verschlussvorrichtung des vorderen Türelements 7 und die Sperrklinke des Drehfallenschlosses 4 entriegelt wird.

Wie in Figur 1 und 2 dargestellt, wird die Türöffnung 13 von den Türelementen 6 und 7, die die Falttür bilden, und dem einzelnen Türelement 1, in dem speziellen Fall einer Vordertür, verschlossen. Dabei ist zwischen dem Türelement 1 und dem Türelement 7 keine zusätzliche B-Säule erforderlich. Die Verriegelung des Türelements 1 mit der Fahrzeugkarosserie erfolgt über ein Drehfallenschloss 8, das jeweils im vorderen oberen und unteren Bereich des Türelements 1 angeordnet ist. Die Drehfallenschlösser 8 sind mit oberhalb und unterhalb der Türöffnung 13 im Schwellerbereich und im Dachbereich angeordneten Schließbügel 3 in Wirkverbindung bringbar.

Anstelle des einzelnen Türelements 1 kann auch eine weitere Falttür, bestehend aus zwei Türelementen 6 und 7, angeordnet werden. Die einzelnen Türelemente 1, 6 und 7 können dabei, wie in den Ausführungsbeispielen erläutert, als Seitentür eines Kraftfahrzeuges eingesetzt werden. Eine Variante der erfindungsgemäßen Lösung sieht vor, dass die Seitentür nur aus den beiden Türelementen 6 und 7 gebildet werden, wobei die Anlenkung des Türelements 6 über die Scharniere 12 im Dachbereich der Fahrzeugkarosserie erfolgt. Es ist aber auch möglich, dass die Fahrzeugtür bestehend aus einer Kombination aus einem Türelement 1 und einem Türelement 6 und 7 oder aus einer Kombination von einem oder zwei Türelementen 6 und 7 oder nur aus einem Türelement 6 und 7 als Hecktür eingesetzt wird. Die Türelemente 1 und/oder 6 können dabei an den horizontalen oberen oder an den vertikalen Türrahmen über die Scharniere 12 angelenkt werden.

### Aufstellung der verwendeten Bezugszeichen

- 1: Türelement
- 2: Dichtung
- 3: Schließbügel
- 4: Drehfallenschloss
- 5: Führungsschiene
- 6: Türelement
- 7: Türelement
- 8: Drehfallenschloss
- 9: Scharnier
- 10: Rollenwagen mit Tragglied
- 11: Scharnierachse
- 12: Scharnier
- 13: Türöffnung

## Patentansprüche

1. Fahrzeugtür für Kraftfahrzeuge, bestehend aus wenigstens zwei zueinander faltbar angeordneten Türelementen (6; 7), die über Scharniere (9) miteinander verbunden sind, wobei eine Außenseite eines Türelements (6) über Scharniere (12) an dem Türrahmen des Fahrzeuges befestigt ist und das andere Türelement (7) über eine an der Karosserie des Fahrzeuges angeordnete Führungsschiene (5) verschiebbar geführt wird,
**dadurch gekennzeichnet, dass**
die zwischen den Türelementen (6) und (7) befindlichen Scharniere (9) jeweils in den äußeren Radbereichen der Türelemente (6) und (7) angeordnet und als Scharnier-Schloss-Kombination derart ausgebildet sind, dass die zylindrisch ausgebildeten Schamierachsen (11) der Scharnier-Schloss-Kombination bei geschlossenen Türelementen (6) und (7) jeweils mit einem an der Fahrzeugkarosserie angeordneten Schloss der Scharnier-Schloss-Kombination in Eingriff stehen.

2. Fahrzeugtür nach Anspruch 1,
**dadurch gekennzeichnet, dass**
das an der Fahrzeugkarosserie angeordnete Schloss ein Drehfallenschloss (4) ist.

3. Fahrzeugtür nach Anspruch 1,
**dadurch gekennzeichnet, dass**
die zylindrisch ausgebildete Scharnierachse (11) der einen Scharnier-Schloss-Kombination bei geschlossenen Türelementen (6) und (7) mit einem an der Fahrzeugkarosserie angeordneten Drehfallenschloss (4) und die zylindrisch ausgebildete Scharnierachse (11) der anderen Scharnier-Schloss-Kombination bei geschlossenen Türelementen (6) und (7) mit einem an der Fahrzeugkarosserie angeordneten Rastzapfen in Eingriff steht.

4. Fahrzeugtür nach Anspruch 1 bis 3,
**dadurch gekennzeichnet, dass**
das über Scharniere (12) mit dem Türrahmen verbundene Türelement (6) eine geringere Breite aufweist als das Türelement (7).

5. Fahrzeugtür nach Anspruch 1 bis 4,
**dadurch gekennzeichnet, dass**
das Türelement (7) über ein Tragglied mit einem in einer Führungsschiene (5) verschiebbar angeordneten Rollenwagen (10) verbunden ist.

6. Fahrzeugtür nach Anspruch 1 bis 5,
**dadurch gekennzeichnet, dass**
in den vorderen äußeren Bereichen des Türelements (7) jeweils eine mit den Türrahmen in Eingriff bringende Verschlussvorrichtung in Form eines Verriegelungsbolzens, eines Fanghakens oder dergleichen zur Fixierung des geschlossenen Türelementes (7) angeordnet ist.

7. Fahrzeugtür nach Anspruch 1 bis 6,
**dadurch gekennzeichnet, dass**
die Türelemente (6) und (7) eine Fahrzeugseitentür bilden, die über die Scharniere (12) mit dem horizontal oberen oder den vertikal angeordneten Türrahmen verbunden ist.

8. Fahrzeugtür nach Anspruch 1 bis 6,
**dadurch gekennzeichnet, dass**
die Türelemente (6) und (7) eine Fahrzeughecktür bilden, die über die Scharniere (12) mit dem horizontal oberen oder den vertikal angeordneten Türrahmen verbunden ist.

9. Fahrzeugtür nach Anspruch 1 bis 8,
**dadurch gekennzeichnet, dass**
die eine Türöffnung (13) verschließende Fahrzeugtür von den Türelementen (6) und (7), oder von den Türelementen (6) und (7) und einem weiteren einzelnen Türelement (1), beispielsweise einer Vordertür, oder einem weiteren Türelement (6) und (7), gebildet wird.

10. Fahrzeugtür nach Anspruch 9,
**dadurch gekennzeichnet, dass**
das einzelne Türelement (1) über Scharniere schwenkbar an der Seite der Türöffnung (13) angeordnet ist, die gegenüber der schwenkbar angeordneten Türelements (6) liegt, wobei in den vorderen äußeren Randbereichen des einzelnen Türelements (1) jeweils ein Drehfallenschloss (8) angeordnet ist, die bei geschlossenen Türelement (1) jeweils mit einem an der Fahrzeugkarosserie angeordneten Schließbügel (3) in Eingriff stehen.
